# EUROPÄISCHE PATENTANMELDUNG

(11) **EP 0 926 351 A2**
(43) Veröffentlichungstag der Anmeldung: **30.06.1999**
(21) Anmeldenummer: 98119563.9
(22) Anmeldetag: 16.10.1998
(51) Int. Cl.: F15B 13/00

(54) **Hydraulisches Steuergerät mit mehrteiligem Gehäuse**

(30) Priorität: 24.12.1997 DE 19757864
(71) Anmelder: Dr.Ing. h.c.F. Porsche Aktiengesellschaft, 70435 Stuttgart (DE)
(72) Erfinder: Sander, Edmund, 71229 Leonberg (DE); Funk, Michael, 71229 Leonberg (DE)

(57) **Zusammenfassung**

Die Erfindung betrifft ein hydraulisches Steuergerät das ein mehrteiliges Gehäuse aufweist um zur Montage an einer Flanschfläche einer zu steuernden Aufrichtung vorgesehen ist. Hierbei sind die verschiedenen Gehäuseteile des Steuergerätes durch lösbare Befestigungsmittel miteinander verbunden. Um ein gattungsgemäßes hydraulisches Steuergerät zu schaffen, das zu Reparaturzwecken demontierbar gehalten ist und bei dem gleichzeitig ein Eingriff außerhalb einer Fachwerkstatt erschwert ist, wird vorgeschlagen, daß zumindest eines der lösbaren Befestigungsmittel zwischen den Gehäuseteilen nur von der Flanschfläche her zugänglich ist.

## Beschreibung

Die Erfindung betrifft ein hydraulisches Steuergerät das ein mehrteiliges Gehäuse aufweist um zur Montage an einer Flanschfläche einer zu steuernden Aufrichtung vorgesehen ist. Hierbei sind die verschiedenen Gehäuseteile des Steuergerätes durch lösbare Befestigungsmittel miteinander verbunden.

Außenseitig montierte hydraulische Steuergeräte werden verwendet, um im Reparatur- oder Wartungsfall die Steuergeräte ohne Zerlegen der zu steuernden Einrichtung abnehmen zu können. Eine derartige zu steuernede Einrichtung kann beispielsweise ein Nutzfahrzeuggetriebe sein. Andererseits sind hydraulische Steuergeräte komplex aufgebaut und in Bezug auf Verschmutzungen sehr empfindlich.

Es ist daher Aufgabe der Erfindung, ein gattungsgemäßes hydraulisches Steuergerät zu schaffen, das zu Reparaturzwecken demontierbar gehalten ist und bei dem gleichzeitig ein Eingriff außerhalb einer Fachwerkstatt erschwert ist.

Erfindungsgemäß erfolgt die Lösung dieser Aufgabe mit den Merkmalen des Patentanspruches 1. Es wird vorgeschlagen, daß zumindest eines der lösbaren Befestigungsmittel zwischen den Gehäuseteilen nur von der Flanschfläche her zugänglich ist. Ein Zerlegen des hydraulischen Steuergerätes ist somit nur nach dessen zuvor erfolgter Demontage möglich. Auf diese Weise muß ein Benutzer, der das hydraulische Steuergerät zerlegen will, das Steuergerät zunächst demontieren bevor er die Gehäuseteile trennen kann. Dem Benutzer ohne Fachkenntnisse ist somit das Zerlegen des Steuergerätes erschwert, da er sich nun vor die Aufgabe gestellt sieht, das gesamte Steuergerät abzunehmen. Gleichzeitig und ebenfalls in vorteilhafter Weise ist verhindert, daß ein Benutzer versehentlich die Befestigungsmittel zwischen den Gehäuseteilen löst und damit das Steuergerät versehentlich zerlegt. Auf diese Weise ist die Wahrscheinlichkeit des versehentlichen Eintretens von Verschmutzungen in das Steuergerät und letztendlich auch in den Hydraulikkreislauf mit hoher Wahrscheinlichkeit verhindert.

Vorteilhafte Weiterbildungen der Erfindung sind in den Unteransprüchen beschrieben.

So wird vorgeschlagen, die Mehrzahl der lösbaren Befestigungsmittel nur von der Flanschfläche her zugänglich anzuordnen. In vorteilhafter Weise ist hiermit verhindert, daß versehentlich vor der Demontage des Steuergerätes Befestigungsmittel, die zur Verbindung der Gehäuseteile dienen, gelöst werden. Von besonderem Vorteil ist es, wenn alle zur Verbindung der Gehäuseteile dienenden Befestigungsmittel nur von der Flanschfläche her zugänglich sind; dies ist in der Praxis jedoch nicht immer durchführbar.

Es wird weiter vorgeschlagen, wenn lösbare Befestigungsmittel unterschiedlicher Länge verwendet sind, die Aufnahme der Befestigungsmittel im Gehäuse so zu gestatten, daß nur bei Verwendung des richtigen Befestigungsmittels ein Kraftschluß zustandekommt. Sind als Befestigungsmittel beispielsweise Schrauben eingesetzt, so sind in diesem Sinne die im Gehäuse eingebrachten Gewinde so gestaltet, daß eine zu kurze nicht greift und eine zu lang gewählte Schraube deutlich aus der zur Aufnahme der Schraube bestimmten Bohrung herausragt, weil sie am Ende der Gewindebohrung aufsitzt. In vorteilhafter Weise ist damit ein Vertauschen der Befestigungsmittel verhindert.

Außerdem kann das hydraulische Steuergerät außenseits von einem Deckel dichtend abgeschlossen sein, wobei der Deckel von außen befestigt ist. Dieser Deckel ist somit auch dann zu lösen, wenn das Steuergerät an der zu steuernden Einrichtung montiert ist. Hierzu ist es nun vorgesehen, daß der Deckel Öffnungen abdeckt, die das Steuergerät durchdringen und damit einen Durchgriff durch das Steuergerät zu der zu steuernden Einrichtung erlauben. Ein solcher Druchgriff kann beispielsweise nötig sein, um wertere, an der zu steuernden Einrichtung vorgesehenen Geber, Einstellvorrichtungen, Kontakte etc. zugänglich zu machen. Durch die Ausbildung der Öffnungen im Steuergerät muß hierzu das Steuergerät nicht demontiert werden. Dadurch, daß diese Öffnungen auch von dem Deckel überdeckt sind, muß zur Abdeckung keine wertere Vorrichtung vorgesehen werden, sondern alle Öffnungen können zusammen mit dem hydraulischen Steuergerät durch einen einzigen Deckel wasser- und staubdicht abgeschlossen werden.

Alternativ oder zusätzlich kann es vorgesehen sein, daß auf der Oberseite des Steuergerätes, d.h. auf dem der Flanschfläche abgewandten Gehäuseteil, Magnetventile, Steckverbinder und elektrische Leitungen vorgesehen sind. Wenn, wie vorgeschlagen, der Deckel zumindest die Magnetventile und Steckverbinder überdeckt, müssen diese weder wasser- noch staubdicht ausgeführt werden, so daß die Verwendung von preiswerteren Steckverbindungen möglich ist. Sind zudem auch die elektrischen Leitungen vom Deckel überdeckt, d.h. nicht durch den Deckel geführt, so ist das Eindringen von Wasser und Staub in das Steuergerät oder in die zu steuernde Einrichtung werter erschwert, da durch den Deckel ein wasser- und staubdichter Abschluß gewährleistet ist. In jedem Fall können bei der Anordnung der Magnetventile und der Steckverbinder innerhalb des durch den Deckel geschaffenen wasser- und staubgeschützten Innenraumes ungeschützt und daher preiswerter ausgeführt werden.

Der Deckel kann ferner innenseits mit Vorsprüngen versehen sein, die korrespondierend zu den Steckverbindern so angeordnet sind, daß die Vorsprünge bei nicht vollständig gesteckten Steckverbindern auf den Steckverbindern aufsetzen und damit ein vollständiges Aufsetzen des Deckels verhindern. Dies ist insbesondere dann von Vorteil, wenn es sich bei den Steckverbindern um die elektrischen Anschlüsse der Magnetventile handelt. Die Montierbarkeit des Deckels zeigt somit in vorteilhafter Weise an, daß alle Steckverbinder vollständig eingesteckt sind. Außerdem verhindern die Vorsprünge bei montiertem Deckel ein Abrutschen der Steckverbinder.

Die Erfindung ist nachstehend anhand des in den Figuren dargestellten Ausführungsbeispieles näher erläutert. Es zeigen:
- Fig. 1: eine Explosionsdarstellung eines hydraulisches Steuergerätes,
- Fig. 2: einen Schraubplan,
- Fig. 3: einen Teilschnitt durch einen Deckel und eine Ventilleiste,
- Fig. 4: zwei Schnitte durch Verschraubungen und
- Fig. 5: eine Ansicht des an einem Getriebe montierten Steuergerätes.

Die einzige Figur zeigt in einer Explosionsdarstellung ein hydraulisches Steuergerät 1. Ein aus Leichtmetall gefertigtes mehrteiliges Gehäuse 2 besteht aus verschiedenen Gehäuseteilen: einem Oberteil 3, einem Unterteil 4 und einer Ventilleiste 10. Zwischen dem Oberteil 3 und dem Unterteil 4 ist eine Dichtungsplatte 5 mit einer Vielzahl von Bohrungen 6 eingelegt. Die Bohrungen 6 dienen zur Verbindung von Nuten 7, die sowohl im Oberteil 3 wie auch im Unterteil 4 vorgesehen sind. Zur Abdeckung des Gehäuses 2 ist ein Deckel 8 mit einer randseitig eingelegten Dichtung 9 vorgesehen. Die Ventilleiste 10 ist am Oberteil 3 und abgedeckt vom Deckel 8 angeordnet und trägt eine Vielzahl von elektrisch betätigten Ventilen 11. Außerdem sind am Oberteil 3 verschiedene Elemente der hydraulischen Druckversorgung angeordnet: ein Filter 12 für die Hydraulikflüssigkeit, ein Druckspeicher 13 sowie ein Druckbegrenzugsventil 14.

Zur Verbindung mit externen hydraulischen Einrichtungen sind Anschlußeinrichtungen 15 in Form von Schraubanschlüssen 16 vorgesehen, die mit nicht näher dargestellten Hydraulikleitungen verbunden sind. Zur Aufnahme der Anschlußeinrichtungen 15 ist eine Stahlplatte 17 vorgesehen, die durch Schrauben 22 am Gehäuse 2 angeschraubt ist. In die Stahlplatte 17 sind Gewindebohrungen 18 zur Aufnahme der Schraubanschlüsse 16 eingearbeitet.

Am Gehäuse 2 ist zur Aufnahme der Stahlplatte 17 eine Flanschfläche 19 vorgesehen, in der korrespondierend zu den Gewindebohrungen 18 nicht näher dargestellte Leitungsbohrungen vorgesehen sind. Zwei dieser Leitungsbohrungen nehmen Ventileinsätze 20 auf, die im Ausführungsbeispiel als Rückschlagventile ausgeführt sind. Um die zur Funktion der Ventileinsätze 20 notwendige Vorspannkraft aufzubringen, sind diese in den Leitungsbohrungen mit Hilfe von nicht gezeigten Absätzen sowie Sicherungsringen 21 unter Vorspannung gehalten. Alternativ ist es jedoch auch möglich, auf die Sicherungsringe 21 zu verzichten und durch entsprechende geometrische Auslegung der Absätze in den Leitungsbohrungen die Vorspannkraft durch die Stahlplatte 17 im montierten Zustand aufzubringen.

Das Steuergerät 1 in dem vorliegenden Fall zur Steuerung eines Fahrzeug-Automatikgetriebes 24 und ist hierzu direkt an einer Flanschfläche 23 des skizziert dargestellten Automatikgetriebe 24 mit seinem Unterteil 4 angeflanscht.

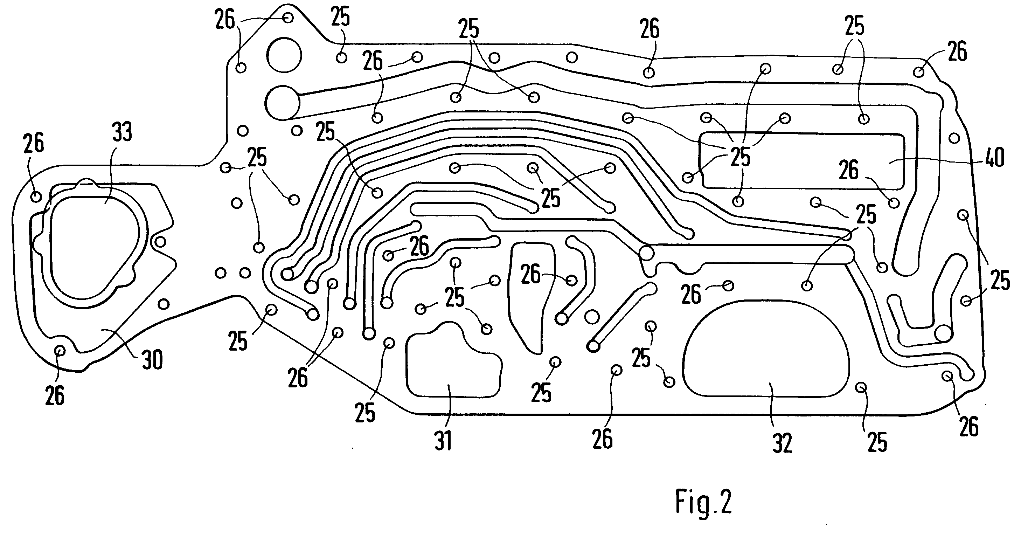

Der in Fig. 2 dargestellte Schraubplan stellt eine Ansicht von oben auf das untere Gehäuseteil hier dar. Durch Bohrungen sind Schrauben 25 geführt, die das Unterteil 4 mit dem Oberteil 3 bzw. das Unterteil 4 mit dem Oberteil 3 und der Ventilleiste 10 verbinden. Diese Schrauben 25 sind alle von der Unterseite des Unterteiles 4 her eingesteckt. Weitere Bohrungen nehmen Schrauben 26 auf, die zur Befestigung des Steuergerätes 1 an der Flanschfläche 23 dienen.

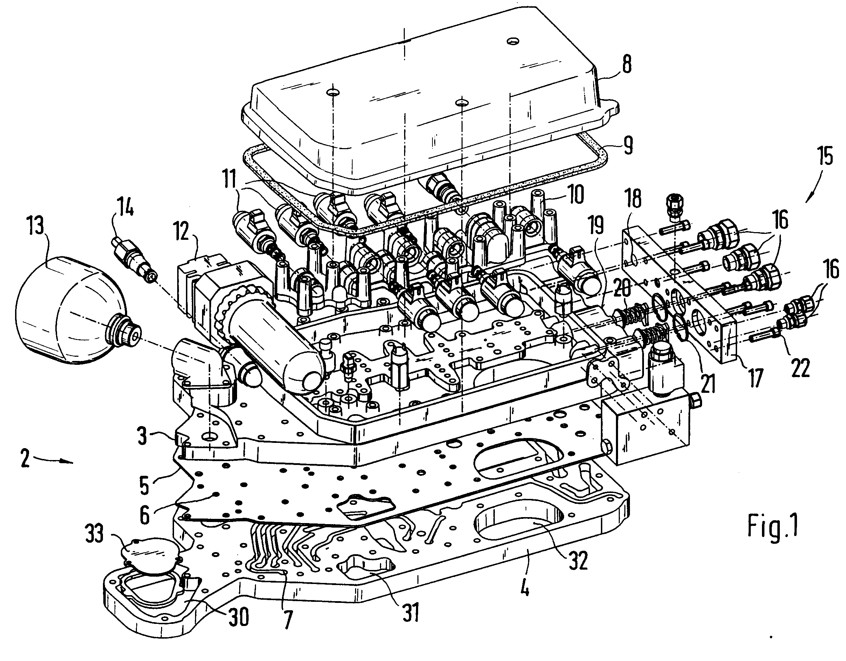

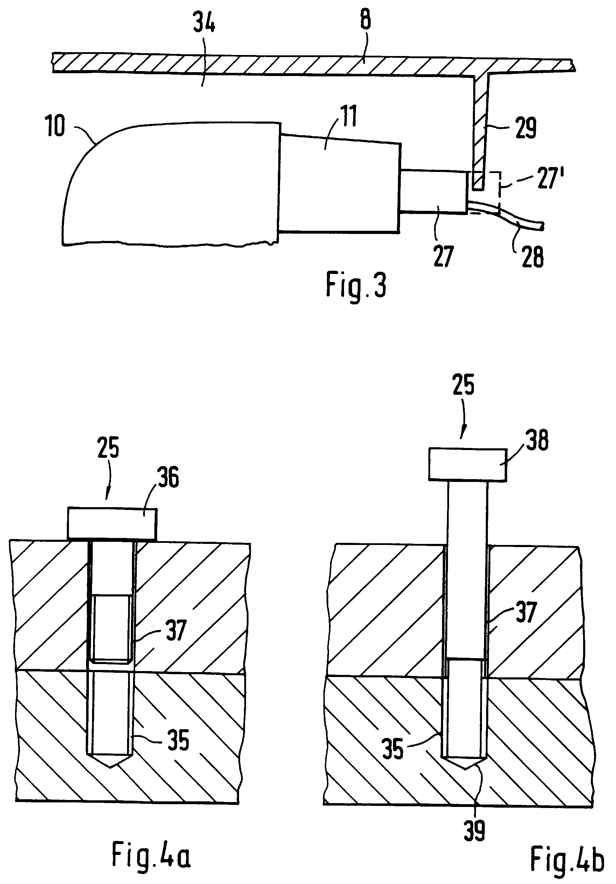

Wie in Fig. 1 zu erkennen, überdeckt der Deckel 8 die Ventilleiste 10 und die Magnetventile 11. Wie ferner in der Teilansicht nach Fig. 3 zu sehen, sind darüber hinaus auch Steckverbinder 27 sowie elektrische Leitungen 28 vom Deckel 8 überdeckt. Innenseits des Deckels angeordnete Vorsprünge 29 sind korrespondierend zu den Steckverbindern 27 angeordnet, und können nur an diesen Steckverbindern 27 vorbeigeschoben werden, wenn die Steckverbinder 27 vollständig montiert sind. Ist ein Steckverbinder 27 nicht vollständig gesteckt (siehe gestrichelte Darstellung 27' in Fig. 3), so setzt der Vorsprung 29 auf dem Steckverbinder 27 auf und der Deckel 8 kann nicht montiert werden.

Die in Fig. 1 und 2 dargestellten Öffnungen 30 bis 32 dienen dem Zugang zu Sensoren, die unterhalb des Steuergerätes 1 an der zu steuernden Einrichtung angeordnet sind. Während die Öffnung 30 mit einem eigenen Deckel 33 versehen ist, sind die Öffnungen 31 und 32 vom Deckel 8 mit überdeckt und somit gegen den Eintritt von Wasser oder Staub geschützt. Eine weitere Öffnung 40, die ebenfalls vom Decke 8 überdeckt ist, nimmt die elektrischen Leitungen 28 auf, so daß die elektrischen Leitungen 28 nicht durch den Deckel 8 geführt werden müssen und hierzu auch keine gesonderte Dichtung vorzusehen ist.

Durch die Anordnung der Steckverbinder 27 und der elektrischen Leitungen 28 innerhalb eines durch den Deckel 8 geschaffenen wasser- und staubgeschützten Innenraumes 34 können die Magnetventile 11, die Steckverbinder 27 sowie die elektrischen Leitungen 28 ungeschützt und daher preiswerter ausgeführt werden.

Bei der Verschraubung der Gehäuseteile 3 und 4 sowie der Ventilleiste 10 müssen Schrauben unterschiedlicher Länge verwendet werden. Um bei der Montage eine Verwechslung verschieden langer Schrauben auszuschließen, sind die Aufnahmen für die Schrauben, d.h. ein Schraubgewinde 35, im Gehäuse 2 so gestaltet, daß nur bei Verwendung der richtigen Schrauben ein Kraftschluß zustande kommt. So zeigt Fig. 4a, daß die Länge einer Durchgangsbohrung 37 so gestaltet ist, daß eine zu kurze Schraube 36 nicht in Eingriff mit dem Einschraubgewinde 35 kommen kann. Wie in Fig. 4b dargestellt, sind die Längen des Einschraubgewindes 35 und der Durchgangsbohrung 37 so gewählt, daß bei einer zu langen Schraube 38 diese am Boden 39 des Einschraubgewindes 35 aufsitzt und in dieser dargestellten Position deutlich aus der Durchgangsbohrung 37 herausragt, so daß unmittelbar erkennbar ist, daß hier kein Kraftschluß zustandegekommen ist.

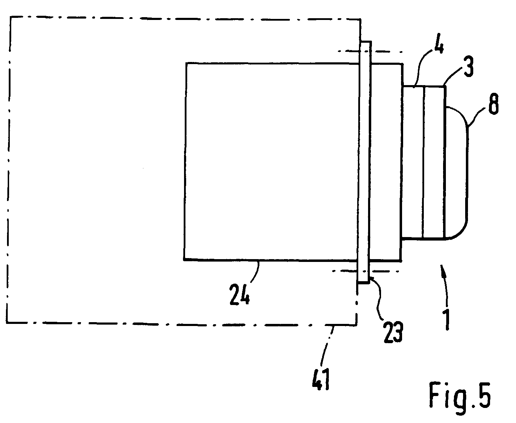

Das Steuergerät 1 ist zur Montage an einem in Fig. 5 skizziert dargestellten Getriebe 24 bestimmt. Als modularer Bestandteil des Getriebes 24 ist eine Hydraulikeinheit 42 vorgesehen, die sämtliche Hydraulikkomponenten enthält. Die Hydraulikeinheit 42 ist seitlich am Getriebe 24 angeflanscht und ragt in das Getriebe 24 hinein. Auf der äußeren Flanschfläche 23 der Hydraulikeinheit 42 ist das Steuergerät 1 befestigt.

## Patentansprüche

1. Hydraulisches Steuergerät (1) mit einem mehrteiligen Gehäuse (2) zur Montage an einer zu steuernden Einrichtung (24), wobei die zu steuernde Einrichtung eine Flanschfläche (23) zur Aufnahme des Steuergerätes aufweist und die Gehäuseteile des Steuergerätes durch lösbare Befestigungsmittel (25) miteinander verbunden sind, dadurch **gekennzeichnet**, daß zumindest eines der lösbaren Befestigungsmittel (25) nur von der Flanschfläche (23) her zugänglich ist.

2. Hydraulisches Steuergerät nach Anspruch 1, dadurch **gekennzeichnet**, daß die Mehrzahl der lösbaren Befestigungsmittel (25) nur von der Flanschfläche (23) her zugänglich ist.

3. Hydraulisches Steuergerät nach Anspruch 1 oder 2, dadurch **gekennzeichnet**, daß lösbare Befestigungsmittel (25) unterschiedlicher Länge verwendet sind, wobei die Aufnahme (35) der Befestigungsmittel im Gehäuse (2) so gestattet ist, daß nur bei Verwendung des richtigen Befestigungsmittels ein Kraftschluß zustande kommt.

4. Hydraulisches Steuergerät nach Anspruch 1, 2 oder 3, dadurch **gekennzeichnet**, daß das Steuergerät (1) außenseits von einem Deckel (8) dichtend abgeschlossen ist, wobei der Deckel von außen befestigt ist.

5. Hydraulisches Steuergerät nach Anspruch 4, dadurch **gekennzeichnet**, daß im Steuergerät (1) durchgehende Öffnungen (32, 33, 40) vorgesehen sind, die einen Durchgriff durch das Steuergerät zu der zu steuernden Einrichtung (24) erlauben, wobei die Öffnungen durch den Deckel (8) überdeckt sind.

6. Hydraulisches Steuergerät nach Anspruch 4 oder 5, dadurch **gekennzeichnet**, daß im Steuergerät (1) auf dem der Flanschfläche (23) abgewandten Gehäuseteil (3) Magnetventile (11), Steckverbinder (27) und elektrische Leitungen (28) vorgesehen sind, wobei zumindest die Magnetventile und Steckverbinder durch den Deckel (8) überdeckt sind.

7. Hydraulisches Steuergerät nach Anspruch 6, dadurch **gekennzeichnet**, daß der Deckel (8) innenseits Vorsprünge (29) korrespondierend zu den Steckverbindern (28) aufweist, wobei die Vorsprünge bei nicht vollständig gesteckten Steckverbindern (27') auf den Steckverbindern aufsetzen.

8. Hydraulisches Steuergerät nach Anspruch 6 oder 7, dadurch **gekennzeichnet**, daß die Leitungen (28) durch zumindest eine der Öffnungen (40) geführt sind.
